Europäisches Patentamt

European Patent Office

Office européen des brevets

(11) Veröffentlichungsnummer: **0 230 267 B1**

# EUROPÄISCHE PATENTSCHRIFT

(45) Veröffentlichungstag der Patentschrift: **04.12.91**

(21) Anmeldenummer: **87100432.1**

(22) Anmeldetag: **15.01.87**

(51) Int. Cl.⁵: **B27D 1/00**

(54) Maschine zur Herstellung kaschierter Furnier-Formate.

(30) Priorität: **15.01.86 DE 3600937**

(43) Veröffentlichungstag der Anmeldung:
**29.07.87 Patentblatt 87/31**

(45) Bekanntmachung des Hinweises auf die
Patenterteilung:
**04.12.91 Patentblatt 91/49**

(84) Benannte Vertragsstaaten:
**CH DE FR IT LI**

(56) Entgegenhaltungen:
**DE-A- 2 255 410**
**DE-A- 3 526 372**
**DE-U- 8 516 615**
**US-A- 3 789 979**

(73) Patentinhaber: **Carl Rückle Maschinenbau
GmbH**

**W-7302 Ostfildern-Kemnat(DE)**

(72) Erfinder: **Burkhard, Oelte, Dipl.-Ing. (FH)
Am Kühnbach 48
W-7170 Schwäbisch Hall - Bibersfeld(DE)**

(74) Vertreter: **Schmid, Berthold, Dipl.-Ing.
Kohler Schmid + Partner Patentanwälte
Ruppmannstrasse 27
W-7000 Stuttgart 80(DE)**

## Beschreibung

Die Erfindung bezieht sich auf eine Maschine zur Herstellung kaschierter Furnier-Formate mit einer Vorrichtung zum Zusammensetzen von Furnierblättern und einer Presse zur Verbindung von Furnier und Kaschiermaterialbahn. In der Furnier-Zusammensetzvorrichtung werden die Furnierblätter stumpf aneinandergeleimt, wodurch eine Furnierbahn entsteht. Diese Furnierbahn kann man nun mittels einer geeigneten Schneidvorrichtung, beispielsweise einem sogenannten Clipper, in lauter in Vorschubrichtung gleich lange Abschnitte, sog. "Formate" aufteilen, die dann entweder weiter veredelt oder verarbeitet werden. In bevorzugter Weise findet eine Kaschierung statt, d.h. die zumindest in Durchlaufrichtung gleich langen Formate werden an ihrer Rückseite mit einem Kaschiermaterial versehen. Die heutigen Furniere sind aus Ersparnisgründen außerordentlich dünn und sie erhalten durch die Kaschierung eine Preiswerte Verstärkung.

Bei einer bekannten Maschine dieser Art (GM 85 16 615) wird die erstellte Furnierbahn kontinuierlich mit einer Kaschiermaterialbahn verleimt. Dies geschieht abschnittweise in einer mit entsprechendem Takt arbeitenden Presse. Die Kaschiermaterialbahn trägt bereits den Leim oder Klebstoff, der in der vorzugsweise beheizbaren Presse aktiviert wird. Auf diese Weise entsteht eine immer länger werdende kaschierte Furnierbahn, die man entweder aufwickeln oder in einzelne kaschierte Furnier-Formate aufteilen kann.

Weil die kaschierten Furnier-Formate bei dieser vorbekannten Maschine in einem Art Durchlaufverfahren erstellt werden, verarbeitet man dort die einzelnen Furnierblätter in Längsrichtung. Dadurch stehen die Fasern benachbarter Furnierblätter in Verlängerung voneinander. Dies hat zwar den Vorteil, daß die Maschine verhältnismäßig schmal gebaut ist, jedoch besteht bei der furnierverarbeitenden Industrie im Grunde genommen ein Bedarf nach Furnier-Formaten, die aus quer zusammengesetzten Furnierblättern gefertigt sind. Die Aufgabe der Erfindung besteht infolgedessen darin, eine Maschine der eingangs genannten Art so weiterzubilden, daß ein Längszusammensetzen der Furnierblätter eines Furnier-Formats vermieden werden kann.

Zur Lösung dieser Aufgabe wird erfindungsgemäß vorgeschlagen, daß die Maschine gemäß dem Oberbegriff des Anspruchs 1 entsprechend dem kennzeichnenden Teil dieses Anspuchs ausgebildet ist. Durch die Verwendung einer Querzusammensetz-Vorrichtung kann man die normalerweise langgestreckten Furnierblätter mit ihren Längsseiten, also in Querrichtung, aneinanderleimen, wobei das Verleimen und das vorherige Ausrichten in bekannter Weise insbesondere automatisch abläuft. Infolgedessen entsteht zunächst eine Furnierbahn, deren Breite der Länge eines länglichen Furnierblattes entspricht. Mit Hilfe eines in Durchlaufrichtung hinter der Querzusammensetzvorrichtung angeordneten Clippers wird diese Furnierbahn vor dem Kaschieren in einzelne Furnier-Formate unterteilt. Selbstverständlich sorgen geeignete Transporteinrichtungen sowohl für den Transport der Furnierblätter in die Querzusammensetz-Vorrichtung als auch den Weitertransport der so entstandenen Furnierbahn zum Clipper und von diesem zur nachgeschalteten Ablegevorrichtung für die Furnier-Formate. Diese Ablegevorrichtung ist ein Teil einer Längstransport-Vorrichtung für die Kaschiermaterialbahn. Schon aus der Bezeichnung sowohl dieser Transportvorrichtung als auch der Zusammensetzvorrichtung ergibt sich, daß ihre beiden Transportrichtungen quer, vorzugsweise senkrecht zueinander verlaufen.

Das bedeutet, daß die Furnierblätter und auch die Furnierbahnen sowie die Furnier-Formate bis zur Ablegevorrichtung quer zur Längsrichtung ihrer Fasern transportiert werden, während ihr Weitertransport nach dem Auflegen der Furnier-Formate auf den auf der Ablegevorrichtung befindlichen Teil der Kaschiermaterialbahn in Längsrichtung der Fasern erfolgt. Man kann deshalb von einem Überecktransport in diesem Bereich sprechen. In Längsrichtung der Fasern bzw. in Laufrichtung der Kaschiermaterialbahn werden die auf letzterer abgelegten Furnier-Formate zur Presse transportiert, wo sie bei gleichzeitigem Aktivieren bzw. Erweichen des Leims od. dgl. der Kaschiermaterialbahn oder nach vorherigem Leimauftrag dauerhaft mit letzterer verbunden werden. Während des Pressens muß die Kaschiermaterialbahn zumindest in diesem Bereich stillstehen.

Die Kaschiermaterialbahn mit den darauf befindlichen fest angeklebten oder angeleimten Furnier-Formaten kann nun zwischen benachbarten einzelnen Formaten durchtrennt oder auch im Ganzen oder zumindest in größeren Einheiten weitertransportiert oder verarbeitet werden.

Die Formate sind üblicherweise langgestreckt. Wenn ihre Breite derjenigen der kaschierten Furnierbahn des Standes der Technik entspricht, so kann eine Kaschiermaterialbahn gleicher Breite und eine Presse gleicher Abmessungen wie bisher verwendet werden. In gleicher Weise ist auch der Einsatz anderer vor- und nachgeschalteter Vorrichtungen möglich. Andererseits verläuft aber die Faser der kaschierten Formate nunmehr in gewünschter Weise in deren Längsrichtung.

In Weiterbildung der Erfindung wird vorgeschlagen, daß die Ablegevorrichtung mit einer Klebe-Heftvorrichtung zum Anheften der Furnier-Formate an die Kaschiermaterialbahn verbunden ist. Mittels dieser Heftvorrichtung werden die auf die Kaschiermaterialbahn aufgelegten Furnier-Formate nach vorherigem Ausrichten so angeheftet, daß sie ihre Relativlage zur Kaschiermaterialbahn während des Transports in die Presse sicher beibehalten. Die Klebe-Heftvorrichtung ist vorzugsweise dem Abgabeende der Ablegevorrichtung zugeordnet.

Eine weitere Ausgestaltung der Erfindung sieht vor, daß die Klebe-Heftvorrichtung ein zustellbares, insbesondere heb- und senkbares, stempelartiges Heizelement und ein ebenfalls zustellbares, vorzugsweise seitwärts wegschwenkbares plattenartiges Druckelement aufweist. Zwischen das stempelartige Heizelement und das plattenartige Druckelement wird der durch Heftung zu verbindende Abschnitt der Furniermaterialbahn und des aufliegenden Furnierformats eingeklemmt. Durch örtliche Erwärmung kommt der Leim od. dgl. der Kaschiermaterialbahn zum Schmelzen und es erfolgt auf diese Weise das Anheften des Furnier-Formats an die Kaschiermaterialbahn. Sowohl das Heizelement als auch das Druckelement müssen bei Nichtgebrauch in eine Position gebracht werden, in der sie weder den Transport der Kaschiermaterialbahn und des Furnier-Formats als auch das Ablegen des letzteren auf die Kaschiermaterialbahn behindern.

Infolgedessen besteht eine zweckmäßige Weiterbildung der Erfindung darin, daß das Heizelement unterhalb der Ebene der Kaschiermaterialbahn und das Druckelement oberhalb der Ebene des aufliegenden Furnier-Formats angeordnet ist. Das Heizelement kann man bei Nichtgebrauch in eine abgesenkte Ruhestellung verbringen und das Druckelement seitwärts so weit aus dem Bewegungsbereich des Furnier-Formats herausschwenken, daß letzteres ungehindert auf der Kaschiermaterialbahn abgelegt werden kann. Die Schwenkebene verläuft dabei etwa parallel zur Ebene der Kaschiermaterialbahn in diesem Bereich.

Die Presse ist in bevorzugter Weise als sogenannte Kurztaktpresse ausgebildet. Sie schließt in kurzen, insbesondere in automatisch gesteuerten Abständen aufeinanderfolgenden Zeitabschnitten vorzugsweise gleicher Länge, die in Abhängigkeit von den verschiedenen Materialien und gegebenenfalls der Aktivierungszeit des Leims od. dgl. festgesetzt werden. Mit der Pressensteuerung ist die Vorschubsteuerung für den An- und Weitertransport der Kaschiermaterialbahn mit den aufliegenden Furnier-Formaten in der Weise verbunden, daß der Weitertransport nur bei entsprechend weit geöffneter Presse erfolgt.

Eine besonders bevorzugte Ausführungsform der Erfindung kennzeichnet sich dadurch, daß dem Pressenauslaß eine Abzugsvorrichtung, insbesondere ein Abzugswalzenpaar, für die Kaschiermaterialbahn mit dem oder den Furnier-Formaten zugeordnet ist. In bevorzugter Weise ist das Abzugswalzenpaar zwischen der Presse und einem zusätzlichen Clipper angeordnet. Dieser kann im Bedarfsfalle betätigt werden, um die Kaschiermaterialbahn jeweils zwischen benachbarten angeleimten Furnier-Formaten zu durchtrennen.

Eine weitere Ausbildung der Erfindung sieht vor, daß der zusätzliche Clipper zwischen dem Abzugswalzenpaar und einer Längsformat-Aufrollvorrichtung für die Furnier-Formate tragenden Kaschiermaterialbahn angeordnet ist. Wenn man den zusätzlichen Clipper nicht betätigt, so kann man mit Hilfe dieser Längsformat-Aufrollvorrichtung die mit Furnier-Formaten versehene Kaschiermaterialbahn aufrollen. Die Furniere sind dabei längsgerollt. In bekannter, aber sehr vorteilhafter Weise kann man zwischen dem Abzugswalzenpaar, oder genauer gesagt zwischen dem zusätzlichen Clipper und der Aufrollvorrichtung noch eine Walzenanordnung mit einer sogenannten Tänzerwalze vorsehen. Dort wird eine Schlaufe gebildet, welche ein zugbelastungsfreies, geordnetes Aufwickeln ermöglicht. In sehr vorteilhafter Weise findet sich eine derartige Anordnung mit mindestens drei Walzen, von denen die mittlere als Tänzerwalze ausgebildet ist, auch zwischen der erwähnten Vliesrolle und der Ablegevorrichtung. Die beiden Einrichtungen sind deshalb auch besonders vorteilhaft, weil sie ein kontinuierliches Abwickeln der Kaschiermaterialbahn einerseits und Aufwickeln der mit Furnier-Formaten versehenen Kaschiermaterialbahn andererseits trotz des taktweisen Stillstands im Bereich der Presse ermöglichen.

Eine andere bevorzugte Variante der Erfindung besteht darin, daß sich über der Arbeitsfläche der Ablegevorrichtung ein zustellbarer Querförderer befindet, dessen Förderrichung derjenigen in der Querzusammensetzvorrichtung entspricht. Damit verläuft natürlich die Förderrichtung des Querförderers auch quer, insbesondere senkrecht zu derjenigen der Kaschiermaterialbahn in der Ablegevorrichtung. Mit Hilfe des Querförderers werden die der Ablegevorrichtung zugeführten Furnier-Formate ohne Richtungsänderung und auch ohne Kaschierung im Bereich der Ablegevorrichtung weitertransportiert. Sie können entweder an anderer Stelle kaschiert oder aber unkaschiert weitertransportiert und/oder gestapelt werden.

Um nun in einem solchen Falle die Kaschiermaterialbahn der Ablegevorrichtung nicht zu beschädigen oder vorher entfernen zu müssen, sieht eine Weiterbildung der Erfindung vor, daß die Kaschiermaterialbahn im Bereich der Ablegevorrichtung mittels eines verschieb- oder schwenkbaren Abdeckorgans überdeckbar ist, wobei in Arbeitsstellung die Übergabeebene der Furnier-Formate über der Ebene des Abdeckorgans angeordnet ist. Das Abdeckorgan schützt demnach die gegebenenfalls darunter befindliche Kaschiermaterialbahn und es bildet zugleich eine Gleitfläche, über welche der Querförderer das Furnier-Format aus der Ablegevorrichtung heraustransportiert. Infolgedessen ist es sehr vorteilhaft, daß das Abdeckorgan durch eine aufrollbare Folie gebildet ist, die einen besonders geringen Reibungswiderstand aufweist. Falls die vom Clipper kommenden Furnier-Formate auf dem Kaschiermaterial abgelegt werden sollen, wird das Abdeckorgan zuvor aufgerollt, so daß es das Ablegen der Furnier-Formate auf der Kaschiermaterialbahn nicht behindert.

In weiterer Ausgestaltung der Erfindung ist vorgesehen, daß die Ablegevorrichtung zwischen dem Clipper und einer Zwischentransportvorrichtung angeordnet ist. Letztere dient, wie ihre Bezeichnung sagt, zum Weitertransport der aus der Ablegevorrichtung kommenden Furnier-Formate.

Diese Ausgestaltung läßt sich dadurch vorteilhaft weiterbilden, daß die Zwischentransportvorrichtung zwischen der Ablegevorrichtung und einem insbesondere mit einer Hebevorrichtung ausgestatteten Stapelvorrichtung angeordnet ist. Auf dieser Stapelvorrichtung werden die unkaschierten Furnier-Formate gestapelt, um sie anschließend einer weiteren Bearbeitung oder Behandlung zuzuführen. Die Hebevorrichtung kann beispielsweise den bis dahin entstandenen Teilstapel nach dem Auflegen eines Furnier-Formats um die Dicke des letzteren absenken, so daß die Zwischenvorrichtung das nächste Furnier-Format lediglich seitwärts überzuschieben hat.

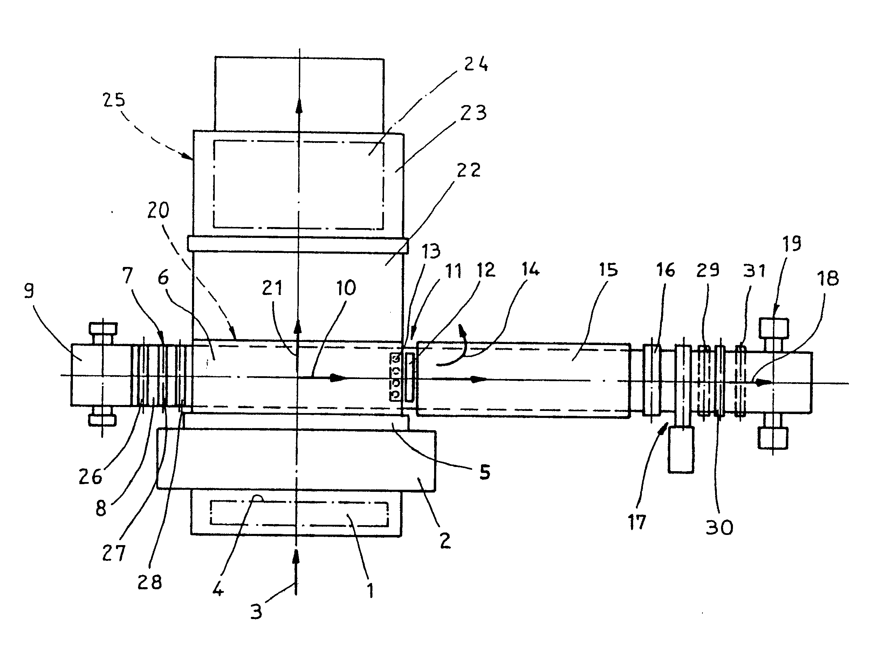

Die Erfindung wird nachstehend anhand der Zeichnung näher erläutert.

Die Zeichnung zeigt ein Ausführungsbeispiel der Erfindung schematisch in Draufsicht.
Die Furnierblätter 1 werden der Vorrichtung zum Zusammensetzen 2 in Richtung des Pfeils 3 zugeführt, wobei sie -wie die Zeichnung zeigt- quer zur Längsrichtung ihrer Fasern eingebracht und damit auch in dieser Weise an das hintere Ende des zuvor eingelegten Furnierblatts bzw. der bis dahin entstandenen Furnierbahn angeleimt werden. Das Ausrichten und Anleimen benachbarter Längskanten 4 der Furnierblätter 1 erfolgt in bekannter Weise. In Durchlaufrichtung 3 gesehen befindet sich hinter der Zusammensetzvorrichtung 2 ein Clipper 5 bekannter Bauart, der von der entstandenen Furnierbahn Abschnitte gleicher Länge, sog. "Furnier-Formate", abschneidet. Diese Furnier-Formate werden in Richtung des Pfeils 3 zu einer Ablegevorrichtung 6 befördert. Sie stellt einen Teil einer Längstransportvorrichtung 7 für eine Kaschiermaterialbahn 8 dar. Ihre Breite entspricht zumindest etwa derjenigen eines Furnier-Formats, in gleicher Richtung gemessen. Die Kaschiermaterialbahn 8 wird von einer Vorratsrolle 9 in Pfeilrichtung 10 abgezogen. Diese Richtung verläuft vorzugsweise senkrecht zur Antransportrichtung der Furnier-Formate. Wenn also letztere auf das unter ihnen befindliche, auf der Ablegevorrichtung 6 aufliegende Teilstück der Kaschiermaterialbahn abgelegt werden, so erfolgt mit Hilfe der Kaschiermaterialbahn in der Ablegevorrichtung eine Bewegungsumkehr um insbesondere 90°. Aus dem Vorstehenden folgt, daß die Zuführebene der Furnier-Formate aus dem Clipper 5 oberhalb der Ebene der Kaschiermaterialbahn 8 in der Ablegevorrichtug 9 gelegen ist. Eine geeignete Übergabevorrichtung sorgt dafür, daß die Furnier-Formate ordnungsgemäß auf der Kaschiermaterialbahn abgelegt werden, so daß sie nicht seitlich über deren Längsränder übersteht.

Um diese korrekte Zuordnung von Furnier-Format und Kaschiermaterialbahn auch beim Weitertransport in Richtung des Pfeils 10 zu sichern, befindet sich vorzugsweise am Abgabeende der Ablegevorrichtung 6 eine Klebe-Heftvorrichtung 11. Sie besteht im wesentlichen aus einem zustellbaren, insbesondere heb- und senkbaren, stempelartigen Heizelement 12, das in der Zeichnung der Deutlichkeit wegen seitlich versetzt von einem plattenartigen Druckelement angeordnet ist, welches sich darüber befindet und das im Sinne des Pfeils 14 wegschwenkbar ist. Das Heizelement 12 ist zweckmäßigerweise unterhalb der Kaschiermaterialbahn 8 angeordnet, während sich das in Arbeitsstellung hereingeschwenkte Druckelement 13 oberhalb dem anzuheftenden Furnier-Format befindet. Wenn das Druckelement abgesenkt und/oder das Heizelement angehoben wird, erfolgt ein örtliches Schmelzen des in der Kaschiermaterialbahn enthaltenen Leims od. dgl. und damit ein sicheres Anheften des Furnier-Formats an der Kaschiermaterialbahn. Nach dem Öffnen der Klebe-Heftvorrichtug erfolgt der Weitertransport an eine Presse, insbesondere eine Kurztaktpresse 15.

In letzterer wird das Furnier-Format an die Kaschiermaterialbahn vollflächig angeleimt, wobei es sich zweckmäßigerweise um eine Presse mit beheizbaren Backen handelt, welch den Leim- oder Klebstoff der Kaschiermateralbahn im gesamten Bereich des Furnier-Formats aktivieren. Zweckmäßigerweise arbeiten die Presse und die Klebe-Heftvorrichtung im selben Takt. Letzterer gibt auch den Takt für den Arbeitshub des Clippers 5 vor und er kann auch bestimmend für das Anleimen des jeweils nächsten Furnierblattes 1 an das zuvor eingelegte sein.

Dem Auslaß der Presse 15, also dem in der Zeichnung rechten Pressenende ist eine Abzugsvorrichtung, insbesondere ein Abzugswalzenpaar 16, für die mit Formaten belegte Kaschiermaterialbahn 8 zugeordnet. Das Abzugswalzenpaar 16 ist zwischen der Presse 15 und einem zusätzlichen Clipper 17 angeordnet. Dieser kann wahlweise betätigt werden. Bei entsprechender Zuordnung zur Presse 15 kann man den Clipper insbesondere dann betätigen, wenn die Presse geschlossen ist. Er dient vor allen Dingen dazu, die Kaschiermaterialbahn jeweils zwischen zwei angeleimten Formaten zu durchtrennen, so daß einzelne kaschierte Furnierformate entstehen. Sie werden im Sinne des Pfeils 18 austransportiert.

Der zusätzliche Clipper 17 befindet sich zwischen dem Abzugswalzenpaar 16 und einer Längsformat-Aufrollvorrichtung 19. Mit Hilfe dieser Vorrichtung wird die Furnierformate tragende Kaschiermaterialbahn aufgewickelt, falls man auf ein Durchtrennen mit Hilfe des zusätzlichen Clippers 17 verzichtet. Welche der beiden Vorrichtungen 17 und 19 man betätigt, hängt von den Wünschen des Kundens bzw. weiterer Be- und Verarbeitungsschritte ab.

Über der Arbeitsfläche der Ablegevorrichtung 6 befindet sich ein zustellbarer Querförderer 20, dessen Förderrichtung durch den Pfeil 21 symbolisiert ist. Mit seiner Hilfe werden die in die Ablegevorrichtung 6 eingebrachten Formate in gleichem Bewegungssinne an der Kurztaktpresse 15 vorbei weiterbewegt. Sie gelangen anschließend auf eine Zwischentransportvorrichtung 22. In Vorschubrichtung 21 gesehen schließt sich daran eine Stapelvorrichtung 23 an, auf der die Formate 24, insbesondere mit Hilfe einer Hebevorrichtung 25, gestapelt werden. Mit letzterer werden die Formate nicht notwendigerweise angehoben, sondern evtl. auch absatzweise um jeweils eine Formatdicke abgesenkt bis der Stapel fertig ist. Es ist ohne weiteres einzusehen, daß die Zwischentransportvorrichtung 22 auch entfallen kann und sich in diesem Falle die Stapelvorrichtung 23 unmittelbar an die Ablegevorrichtung 6 anschließt.

Die Kaschiermaterialbahn 8 ist im Bereich der Ablegevorrichtung 6 mittels eines verschieb- oder schwenkbaren Abdeckorgans überdeckbar. Die Übergabeebene der Furnierformate 24 vom Clipper 5 an die Ablegevorrichtung 6 liegt über der Ebene des in der Draufsicht nicht sichtbaren Abdeckorgans. Wenn sich letzteres in seiner Arbeitsstellung befindet, so können die Formate nicht auf die darunter befindliche Kaschiermaterialbahn bzw. deren Stützfläche übergeben werden, sondern an das Abdeckorgan. Es handelt sich dabei in bevorzugter Weise um eine auf- und abrollbare, entsprechend belastbare Folie beispielsweise aus Kunststoff. Auf dieser gleitet das jeweils aufgelegte Format 24 besonders gut. Mit Hilfe des erwähnten Querförderers 20 wird es im Sinne des Pfeils 21 vom Abdeckorgan abgezogen und zur Zwischentransportvorrichtung 22 befördert. Infolgedessen sind diese Formate 24 unkaschiert und sie können entweder anderweitig kaschiert oder unkaschiert verarbeitet werden. Wenn man das Abdeckorgan bzw. die aufrollbare Folie aufwickelt, so ist die Kaschiermaterialbahn 8 bzw. deren Längsführung in der Ablegevorrichtung 6 wieder zugänglich, so daß die Formate nunmehr auf der Kaschiermaterialbahn abgelegt werden können.

Damit trotz des taktweisen Arbeitens, insbesondere der Presse 15, die Kaschiermaterialbahn 8 kontinuierlich von der Vorratsrolle 9 abgezogen werden kann, ist in deren Vorschubrichtung 10 gesehen vor der Ablegevorrichtung 6 und hinter der Presse 15, insbesondere aber hinter dem zusätzlichen Clipper 17, jeweils eine an sich bekannte, zumindest drei Walzen 26, 27 und 28 bzw. 29, 30 und 31 umfassende Vorrichtung vorgesehen, wobei die mittlere Walze 27 bzw. 30 als sogenannte Tänzerwalze ausgebildet ist, die jeweils für die Bildung einer sich im Takt vergrößernden und verkleinernden Schlaufe sorgt. Diese Schlaufen erstrecken sich senkrecht zur Bildebene nach unten hin.

**Patentansprüche**

1. Maschine zur Herstellung kaschierter Furnier-Formate mit einer Vorrichtung zum Zusammensetzen von Furnierblättern und einer Presse zur Verbindung von Furnier und Kaschiermaterialbahn dadurch gekennzeichnet, daß die Vorrichtung zum Zusammensetzen (2) der Furnierblätter (1) als Querzusammensetzvorrichtung ausgebildet ist, deren Auslaß mit dem Einlaß eines Clippers (5) verbunden ist, und daß dem Auslaß des Clippers eine Ablegevorrichtung (6) für die Furnierformate (24) zugeordnet ist, die Teil einer Längstransportvorrichtung (7) für die Kaschiermaterialbahn (8) ist, wobei dem Anfang der Ablegevorrichtung (6) eine Kaschiermaterialrolle (9) od. dgl. und ihrem Ende die Presse (15) zugeordnet sind, und daß die Vorschubrichtung (10) der Kaschiermaterialbahn (8) quer, insbesondere senkrecht, zu derjenigen (3) der Querzusammensetzvorrichtung (2) verläuft.

2. Maschine nach Anspruch 1 dadurch gekennzeichnet, daß die Ablegevorrichtung (6) mit einer Klebe-Heftvorrichtung (11) zum Anheften der Furnierformate (24) an die Kaschiermaterialbahn (8) verbunden ist.

3. Maschine nach Anspruch 2 dadurch gekennzeichnet, daß die Klebe-Heftvorrichtung (11) dem Abgabeende der Ablegevorrichtung (6) zugeordnet ist.

4. Maschine nach Anspruch 3 dadurch gekennzeichnet, daß die Klebe-Heftvorrichtung (11) ein zustellbares, insbesondere heb- und senkbares, stempelartiges Heizelement (12) und ein ebenfalls zustellbares, vorzugsweise seitwärts wegschwenkbares, plattenartiges Druckelement (13) aufweist.

5. Maschine nach Anspruch 4 dadurch gekennzeichnet, daß das Heizelement (12) unterhalb der Ebene der Kaschiermaterialbahn (8) und das Druckelement (13) oberhalb der Ebene des aufliegenden Furnierformats (24) angeordnet ist.

6. Maschine nach wenigstens einem der vorhergehenden Ansprüche dadurch gekennzeichnet, daß die Presse als Kurztaktpresse (15) ausgebildet ist.

7. Maschine nach wenigstens einem der vorhergehenden Ansprüche dadurch gekennzeichnet, daß dem Pressenauslaß eine Abzugsvorrichtung (16), insbesondere ein Abzugswalzenpaar, für die belegte Kaschiermaterialbahn (8) zugeordnet ist.

8. Maschine nach Anspruch 7 dadurch gekennzeichnet, daß das Abzugswalzenpaar (16) zwischen der Presse (15) und einem zusätzlichen Clipper (17) angeordnet ist.

9. Maschine nach Anspruch 8 dadurch gekennzeichnet, daß der zusätzliche Clipper (17) zwischen dem Abzugswalzenpaar (16) und einer Längsformat-Aufrollvorrichtung (19) für die Furnierformate (24) tragende Kaschiermaterialbahn (8) angeordnet ist.

10. Maschine nach wenigstens einem der vorhergehenden Ansprüche dadurch gekennzeichnet, daß sich über der Arbeitsfläche der Ablegevorrichtung (6) ein zustellbarer Querförderer (20) befindet, dessen Förderrichtung (21) derjenigen (3) in der Querzusammensetzvorrichtung (2) entspricht.

11. Maschine nach Anspruch 10 dadurch gekennzeichnet, daß die Kaschiermaterialbahn (8) im Bereich der Ablegevorrichtung (6) mittels eines verschieb- oder schwenkbaren Abdeckorgans überdeckbar ist, wobei in Arbeitsstellung die Übergabeebene der Furnierformate (24) über der Ebene des Abdeckorgans angeordnet ist.

12. Maschine nach Anspruch 11 dadurch gekennzeichnet, daß das Abdeckorgan durch eine aufrollbare Folie gebildet ist.

13. Maschine nach wenigstens einem der vorhergehenden Ansprüche dadurch gekennzeichnet, daß die Ablegevorrichtung (6) zwischen dem Clipper (5) und einer Zwischentransportvorrichtung (22) angeordnet ist.

14. Maschine nach Anspruch 13 dadurch gekennzeichnet, daß die Zwischentransportvorrichtung (22) zwischen der Ablegevorrichtung (23) und einer, insbesondere mit einer Hebevorrichtung (25) ausgestatteten, Stapelvorrichtung (23) angeordnet ist.

**Claims**

1. Machine for manufacturing sized veneer laminates with an apparatus for assembling veneer sheets and a press for connecting the veneer and a laminate material strip, characterised in that the apparatus (2) for assembling the veneer sheets (1) is in the form of a transverse assembly apparatus of which the outlet is connected to the inlet of a cutting device (5); and in that there is associated with the outlet of the cutting device a distribution device (6) for the sized veneer parts (24) which is part of a longitudinal conveying device (7) for the laminate material strip, wherein a laminate material roll (9) or the like is associated with the start of the distribution device (6) and the press (15) is associated with the end thereof; and in that the feed direction (10) of the laminate material strip (8) extends transversely, in particular perpendicular, to that (3) of the transverse assembly apparatus (2).

2. Machine according to claim 1, characterised in that the distribution device (6) is connected to a bonding and adhesion device (11) for the adhesion of the sized veneer parts (24) to the laminate material strip (8).

3. Machine according to claim 2, characterised in that the bonding and adhesion device (11) is associated with the delivery end of the distribution device (6).

4. Machine according to claim 3, characterised in that the bonding and adhesion device (11) comprises a stamp-like heating element (12), which is adjustable and in particular can be raised and lowered, and a plate-like pressure element (13) which is likewise adjustable and can preferably be pivoted out laterally.

5. Machine according to claim 4, characterised in that the heating element (12) is disposed below the plane of the laminate material strip (8) and the pressure element (13) is disposed above the plane of the supported sized veneer parts (24).

6. Machine according to at least one of the preceding claims, characterised in that the press is in the form of a short cycle press (15).

7. Machine according to at least one of the preceding claims, characterised in that there is associated with the press outlet a drawing-off device (16), in particular a pair of take-up rollers, for the covered laminate material strip (8).

8. Machine according to claim 7, characterised in that the pair of take-up rollers (16) is disposed between the press (15) and an additional cutting device (17).

9. Machine according to claim 8, characterised in that the additional cutting device (17) is disposed between the pair of take-up rollers (16) and a longitudinal format - roll up device (19) for the laminate material strip (8) supporting the sized veneer parts (24).

10. Machine according to at least one of the preceding claims; characterised in that there is located above the operating surface of the distribution device (6) an adjustable transverse conveyer (20) of which the conveying direction corresponds to that (3) in the transverse assembly apparatus (2).

11. Machine according to claim 10, characterised in that the laminate material strip (8) can be covered in the region of the distribution device (6) by means of a displaceable or pivotable covering member, wherein in the operating position the transfer plane of the sized veneer parts (24) is disposed above the plane of the covering member.

12. Machine according to claim 11, characterised in that the covering member is formed by a foil which can be rolled up.

13. Machine according to at least one of the preceding claims, characterised in that the distribution device (6) is disposed between the cutting device (5) and an intermediate conveying device (22).

14. Machine according to claim 13, characterised in that the intermediate conveying device (22) is disposed between the distribution device (23) and a stacking device (23) which is in particular equipped with a lifting device (25).

**Revendications**

1. Machine de fabrication de placages laminés dimensionnés présentant un dispositif pour assembler des feuilles de placage, ainsi qu'une presse pour solidariser une bande d'un matériau de placage et de laminage, caractérisée par le fait que le dispositif (2) d'assemblage des feuilles de placage (1) est réalisé sous la forme d'un dispositif d'assemblage transversal, dont la sortie est reliée à l'entrée d'un massicot (5) ; par le fait qu'un dispositif (6) récepteur des placages dimensionnés (24), associé à la sortie du massicot, fait partie d'un dispositif (7) d'acheminement longitudinal de la bande (8) de matériau de laminage, un rouleau (9) de matériau de laminage ou élément similaire étant associé à la zone initiale du dispositif récepteur (6), et la presse (15) étant associée à sa zone finale ; et par le fait que la direction d'avance (10) de la bande (8) de matériau de laminage s'étend transversalement, en particulier perpendiculairement à celle (3) du dispositif (2) d'assemblage transversal.

2. Machine selon la revendication 1, caractérisée par le fait que le dispositif récepteur (6) est relié à un dispositif (11) de fixation par collage, destiné à assujettir les placages dimensionnés (24) à la bande (8) de matériau de laminage.

3. Machine selon la revendication 2, caractérisée par le fait que le dispositif (11) de fixation par collage est associé à l'extrémité de délivrance du dispositif récepteur (6).

4. Machine selon la revendication 3, caractérisée par le fait que le dispositif (11) de fixation par collage comprend un élément chauffant (12) du type pilon, pouvant être réglé et notamment soulevé et abaissé, ainsi qu'un élément presseur (13) du type plaque qui est également réglable, de préférence escamotable par pivotement latéral.

5. Machine selon la revendication 4, caractérisée par le fait que l'élément chauffant (12) se trouve au-dessous du plan de la bande (8) de matériau de laminage, l'élément presseur (13) étant situé au-dessus du plan du placage dimensionné (24) reposant à plat.

6. Machine selon au moins l'une des revendications précédentes, caractérisée par le fait que la presse est réalisée sous la forme d'une presse (15) à cadence courte.

7. Machine selon au moins l'une des revendications précédentes, caractérisée par le fait qu'un dispositif d'évacuation (16), en particulier une paire de cylindres d'évacuation de la bande garnie (8) de matériau de laminage, est associé à la sortie de la presse.

8. Machine selon la revendication 7, caractérisée par le fait que la paire de cylindres d'évacuation (16) est intercalée entre la presse (15) et un massicot additionnel (17).

9. Machine selon la revendication 8, caractérisée par le fait que le massicot additionnel (17) est interposé entre la paire de cylindres d'évacuation (16) et un dispositif (19) enrouleur de formats longitudinaux, destiné à la bande (8) de matériau de laminage portant des placages dimensionnés (24).

10. Machine selon au moins l'une des revendications précédentes, caractérisée par le fait qu'un convoyeur transversal réglable (20) se trouve au-dessus de la surface de travail du dispositif récepteur (6), la direction de convoyage (21) dudit convoyeur correspondant à celle (3) du dispositif (2) d'assemblage transversal.

11. Machine selon la revendication 10, caractérisée par le fait que la bande (8) de matériau de laminage peut être recouverte, dans la région du dispositif récepteur (6), au moyen d'un organe de recouvrement pouvant coulisser ou pivoter, le plan de transfert des placages dimensionnés (24) étant situé, en position de travail, au-dessus du plan de l'organe de recouvrement.

12. Machine selon la revendication 11, caractérisée par le fait que l'organe de recouvrement est formé par une feuille enroulable.

13. Machine selon au moins l'une des revendications précédentes, caractérisée par le fait que le dispositif récepteur (6) est interposé entre le massicot (5) et un dispositif (22) de transport intermédiaire.

14. Machine selon la revendication 13, caractérisée par le fait que le dispositif (22) de transport intermédiaire est interposé entre le dispositif récepteur (6) et un dispositif d'empilement (23) équipé, en particulier, d'un dispositif élévateur (25).